# EUROPEAN PATENT APPLICATION

(11) **EP 2 657 177 A1**
(43) Date of publication of application: **30.10.2013**
(21) Application number: 13164890.9
(22) Date of filing: 23.04.2013
(51) Int. Cl.: B66F 5/02, B60P 3/12

(54) **Trolley for the towing of vehicles**

(30) Priority: 24.04.2012 IT TO20120365
(71) Applicant: Omars S.p.A., 12100 Cuneo (IT)
(72) Inventor: Andreis, Renato, 12100 CUNEO (IT)
(74) Representative: Robba, Pierpaolo

(57) **Abstract**

A trolley (10), in particular for the removal of stranded vehicles, comprising a trolley body (40) which is arranged to contain a wheel (11) of a vehicle to be removed and comprises in turn an extendable device (22, 24) and a side connected to the extendable device by means of connecting elements (12), said trolley further comprising a first wheel assembly (34), mounted between said extendable device (22, 24) and said side, and a second wheel assembly (31), mounted on a support, the extendable device (22, 24) being arranged to be extended in a longitudinal direction in order to adapt the trolley to wheels of different sizes and the support being rotatably mounted, relative to the trolley body (40), so as to rotate about an axis substantially transverse to the longitudinal axis of the longitudinal extendable device (22, 24), for lifting the wheel (11) of the vehicle to be towed.

## Description

### Technical Field

The present invention relates to a trolley, in particular for the removal of vehicles.

### Prior Art

Use of trolleys for the removal of vehicles, for example broken-down vehicles, or for the removal of a vehicle from a no-parking zone is known in the art.

Known trolleys are positioned under a locked wheel of a vehicle to be removed, so that it can be towed with a breakdown truck.

However, the known trolleys suffer from a number of drawbacks, in particular concerning the ease of installation and the robustness of the system.

### Disclosure of the Invention

It is an object of the present invention to provide a trolley, in particular for the removal of stranded vehicles.

According to another aspect of the present invention, there is provided a trolley of the kind mentioned above, which is capable of having a simple and strong structure, which can be easily operated by an operator.

According to the present invention, the above and other objects are achieved by means of a trolley as claimed herein.

It is to be understood that the appended claims are an integral part of the technical teaching provided herein in the description of the present invention.

### Brief Description of the Drawings

Further features and advantages of the present invention will become apparent from the following detailed description, given only by way of non-limiting example, with reference to the accompanying drawings, in which:
- Figures 1a to 1d are views showing a first condition of the trolley of the invention; and
- Figures 2a to 2d are views showing a second condition of the trolley of the invention.

### Description of a Preferred Embodiment

Referring to the Figures, an exemplary embodiment of a trolley for the removal of stranded vehicles according to the present invention is denoted by reference numeral 10.

The trolley 10 is intended to be used for accommodating a wheel 11 of a vehicle to be removed, and allows the lifting of the wheel from the ground in order to remove the vehicle, for example by means of a breakdown truck.

Referring to the Figures, the trolley 10 comprises an extendable device 20 arranged to be extended in a longitudinal direction or axis for adapting the trolley to wheels of different sizes.

In the present detailed description, the terms "longitudinal" and "transverse" will be used to define directions or orientations of different components relative to the extendable device 20 of the trolley 10.

It is intended that the above terms have the following meaning: the term "longitudinal" refers to a direction or axis substantially coinciding with or parallel to the longitudinal axis of the extendable device 20; the term "transverse" refers to a direction or axis substantially perpendicular to the longitudinal axis of the extendable device 20.

Preferably, the extendable device 20 is a telescopic device and comprises, for instance, a first tubular element 24 and a second tubular element 22 arranged to slide within each other.

In a preferred manner, the extendable device 20 comprises a catch 23 adapted to lock the sliding of the first tubular element 24 and of the second tubular element 22 in a plurality of positions.

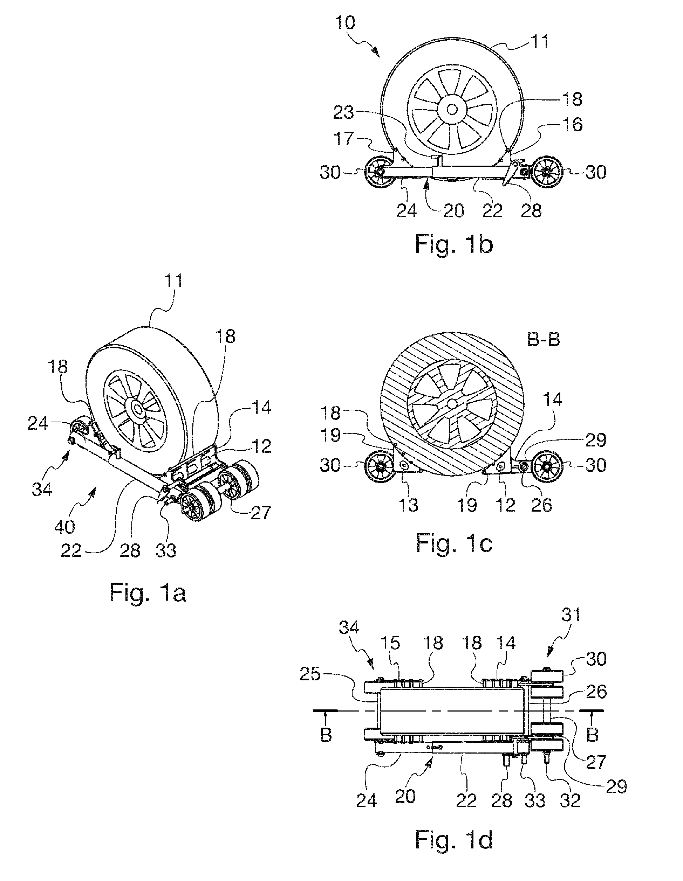

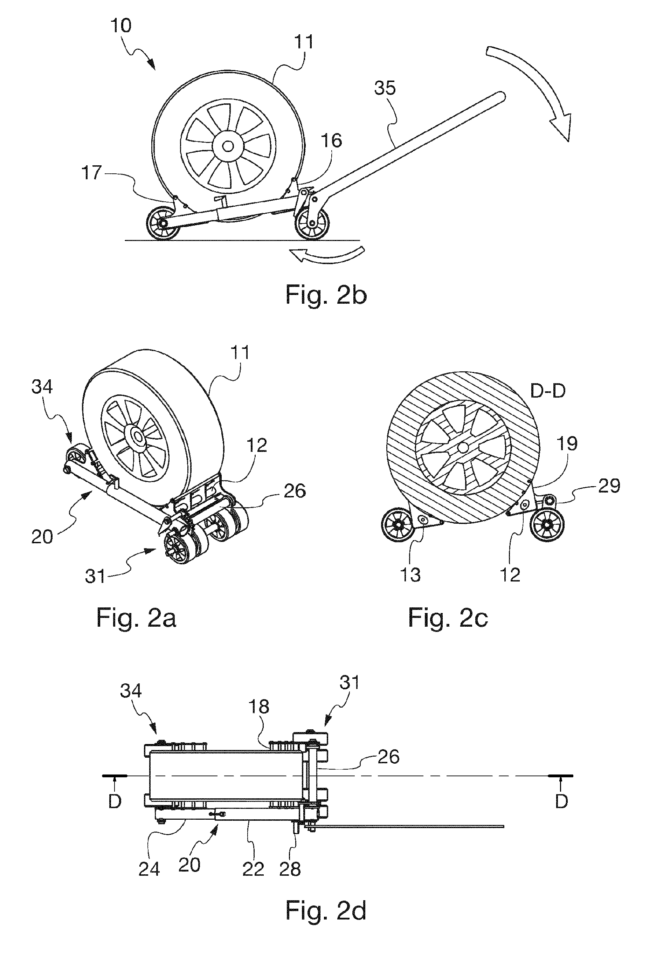

Referring to Figures 1a, 1c, 2a and 2c, the trolley 10 comprises a first connecting element 13 connected in a transverse direction to the longitudinal axis of the first tubular element 24, and a second connecting element 12 connected in a transverse direction to the longitudinal axis of second tubular element 22.

Preferably, the first connecting element 13 and the second connecting element 12 are arranged in a direction perpendicular to the longitudinal axis of the extendable device 20, in the direction of the axis of the wheel 11 of the vehicle to be towed.

For instance, the first connecting element 13 and the second connecting element 12 are bars welded, or fastened by equivalent means, to the first tubular element 24 and to the second tubular element 22, respectively.

In a preferred manner, the first connecting element 13 and the second connecting element 12 have one of their ends connected to the first tubular element 24 and to the second tubular element 22, respectively.

The end of the first connecting element 13 opposite to the first tubular element 24 is connected to a first side 15, and the end of the second connecting element 12 opposite to the second tubular element 22 is connected to a second side 14.

The extendable device 20, the first connecting element 13, the first side 15, the second side 14 and the second connecting element 12 are included in a trolley body 40.

In particular, the trolley body 40 is arranged to accommodate a wheel 11 of a vehicle to be removed.

Support elements 18 are mounted between the first side 15 and the first tubular element 24 and between the second side 14 and the second tubular element 22, in order to support the wheel 11 of the vehicle to be removed.

Preferably, the support elements 18 are arranged in a direction perpendicular to the longitudinal axis of the extendable device 20, in the direction of the axis of the wheel 11 of the vehicle to be towed.

For instance, the support elements 18 are bars welded, or fastened by equivalent means, to the sides 15 and 14 and to the tubular elements 24 and 22.

Preferably, reinforcement tabs 19 are connected to the first connecting element 13 and to the second connecting element 12 and cooperate with the support elements 18 to support the wheel 11.

For instance, seats for housing the first connecting element 13 and the second connecting element 12 are formed in the tabs 19; the first connecting element 13 and the second connecting element 12 are for instance welded, or connected by other known means, to the tabs 19.

Similarly, seats adapted to house the support elements 18 can be formed in the tabs 19.

Preferably, a first tab 17 is formed in the upper part of the first tubular element 24 and a second tab 16 is formed in the upper part of the second tubular element 22.

For instance, the tabs 16 and 17 are welded, or fastened by equivalent means, to the tubular elements 24 and 22.

Preferably, the support elements 18 are connected, for instance welded, to the tabs 16 and 17.

The extendable device 20, the support elements 18, the first side 15 and the second side 14 define a housing for the wheel 11 of the vehicle to be towed.

A first wheel assembly 34 is mounted between the extendable device 20 and the first side 15.

Preferably, the first wheel assembly 34 comprises a pair of wheels 30 mounted on a first wheel axis 25, located between the end of the first tubular element 24, opposite to the second tubular element 22, and the first side 15.

The first axis wheel 25 is arranged in a direction transverse to the longitudinal axis of the first tubular element 24, preferably it is arranged in a direction perpendicular to the longitudinal axis of the first tubular element 24 of the extendable device 20, in the direction of the axis of the wheel 11 of the vehicle to be towed.

A connecting element 26, for instance a known pivot or hinge, is mounted between the end of the second tubular element 22 opposite to the first tubular element 24, and the second side 14.

The connecting element 26 is arranged in a direction transverse to the longitudinal axis of the second tubular element 22 of the extendable device 20, preferably it is arranged in a direction perpendicular to the longitudinal axis of the second tubular element 22 of the extendable device 20, in the direction of the axis of the wheels 30 of the trolley and of the wheel 11 of the vehicle to be towed.

A second wheel assembly 31 is rotatably mounted, about the connecting element 26, relative to the trolley body 40, so as to rotate about an axis substantially transverse to the longitudinal sliding axis of the longitudinal extendable device 20.

Preferably, the second wheel assembly 31 is rotatably mounted about the connecting element 26, so as to rotate about an axis substantially perpendicular to the longitudinal axis of the extendable device 20, in the direction of the axis of the wheels 30 of the trolley 10.

In particular, the connecting element 26 is mounted between the trolley body 40 and the second wheel assembly 31.

The trolley 10 of the invention comprises known locking means 28, for example a locking ratchet, acting between the second wheel assembly 31 and the trolley body 40 in order to maintain the second wheel assembly 31 in a position so as to keep the wheel 11 lifted, as will be explained below in detail.

Advantageously, the connecting element 26 is mounted with its axis parallel to the axis 25 of the wheels 30 of the trolley 10.

The second wheel assembly 31 is rotatably mounted on a second wheel assembly support 29.

In a preferred manner, the second wheel assembly 31 comprises a second wheel axis 27, on which a pair of wheels 30 of the trolley 10 is mounted; preferably, two pairs of wheels 30 are mounted on the second wheel axis 27.

Preferably, the second wheel axis 27 is mounted on the second wheel assembly support 29; advantageously, the second wheel axis 27 is mounted on two second wheel assembly supports 29.

The second wheel assembly support 29 is rotatably mounted, about the connecting element 26, relative to the trolley body 40, so as to rotate about an axis substantially transverse to the longitudinal sliding axis of the longitudinal extendable device 20.

Preferably, the second wheel assembly support 29 is rotatably mounted, about the connecting element 26, so as to rotate about an axis substantially perpendicular to the longitudinal axis of the extendable device 20, in the direction of the axis of the wheels 30 of the trolley 10.

In a preferred manner, the second wheel assembly support 29 extends in the longitudinal direction so as to form an arm between the second wheel axis 27 and the connecting element 26; for example, the second wheel assembly support 29 is constituted by a bar or by a tubular element.

The trolley 10 further comprises second wheel assembly rotation means 32 and trolley rotation means 33, arranged to transmit the movement from a lifting device 35 to the second wheel assembly 31 and to the trolley body 40, for lifting the wheel 11 of the vehicle to be towed, as will be shown later in detail.

For instance, the lifting device 35 is a lever manually operated by an operator, the second wheel assembly rotation means 32 and trolley rotation means 33 consist of a pin formed on the part of the second wheel axis 27 that is outside of the wheel 30, and the trolley rotation means 33 consist of a pin formed on the part of the connecting element 26 that is outside of the extendable device 20.

The lever 35 for instance comprises two seats, in which the pins 32 and 33 are inserted.

The operation of the trolley for the removal of stranded vehicles illustrated in the drawings will now be described.

Referring to Figures 1a, 1b and 1c, the trolley 10 is in its lowered position and is brought underneath the wheel of the vehicle to be lifted by moving the trolley in a transverse direction, substantially perpendicular to the longitudinal axis of the extendable device 20, that is in the direction of the axis of the wheel 11 of the vehicle to be towed.

The wheel of the vehicle is thus made to pass between the first side 15 and the second side 14.

In order to intervene on the broken-down vehicle, the extendable device 20 is adjusted by sliding the first tubular element 24 and the second tubular element 22, so as to adapt the trolley to the wheel 11 of the vehicle to be lifted, and by locking the extendable device 20 in the desired position by means of the catch 23.

In the above arrangement, the support elements 18 are brought into contact with the wheel 11 of the vehicle to be lifted.

Once the trolley is locked on the wheel 11, the lifting of the wheel 11 of the vehicle by the lifting device 35 to arrive in the raised condition of the trolley, shown in Figures 2a, 2b and 2c begins.

The lifting device 35, by acting on the pivot pins 32 and 33, transmits a rotational movement to the second wheel assembly and to the trolley body, thus rotating the second wheel assembly 31 about the axis of the connecting element 26, so as to bring the second wheel assembly 31 underneath the connecting element 26, and to lift the trolley body 40 and together with it the wheel 11 and the vehicle to be towed.

At the end of the rotation of the second wheel assembly 31 the trolley body 40, and in particular the extendable device 20, takes an inclined position in which its end facing the second wheel assembly 31 is raised above the wheels of the second wheel assembly 31.

The end of the extendable device 20 facing the first wheel assembly 34, however, remains at its initial height.

This inclined position of the trolley body 40 allows to lift the wheel 11 of the vehicle from the ground, thus making it possible to tow and remove the vehicle.

The trolley 10 is finally locked in its raised position by the locking ratchet 28.

The trolley 10 for the removal of stranded vehicles according to the invention has the advantage of having a simple and strong structure, which can be easily operated by an operator.

Of course, while the principle of the invention remains unchanged, the embodiments and the construction details may be widely varied with respect to what has been described and shown by way of non-limiting example only, without thereby departing from the scope of the invention as defined in the appended claims.

## Claims

1. Trolley (10), in particular for the removal of stranded vehicles, comprising:
- a trolley body (40) which is arranged to accomodate a wheel (11) of a vehicle to be removed and comprises an extendable device (20), and a side (15) connected to the extendable device (20) by means of connecting elements (13);
- a first wheel assembly (34) mounted between said extendable device (20) and said side (15); and
- a second wheel assembly (31) mounted on a support (29), **characterized in that** the extendable device (20) is arranged to be extended in a longitudinal direction in order to adapt the trolley to wheels of different sizes, and **in that** the support (29) is rotatably mounted, relative to the trolley body (40), so as to rotate about an axis substantially transverse to the longitudinal axis of the extendable device (20), for lifting the wheel (11) of the vehicle to be towed.

2. Trolley (10) according to claim 1, further comprising a connecting element (26) mounted between said trolley body (40) and said second wheel assembly (31), **characterized in that** the support (29) is rotatably mounted on said connecting element (26).

3. Trolley (10) according to claim 2, **characterized in that** said connecting element (26) is arranged in a direction transverse to the longitudinal axis of the extendable device (20).

4. Trolley (10) according to any one of the preceding claims, **characterized in that** said support (29) extends in the longitudinal direction so as to form an arm between the axis of the second wheel assembly (31) and the connecting element (26).

5. Trolley (10) according to any one of the preceding claims, **characterized in that** it further comprises support elements (18) arranged to support the wheel (11) of the vehicle to be removed.

6. Trolley (10) according to any one of the preceding claims, **characterized in that** said extendable device (20) comprises a first tubular element (24) and a second tubular element (22) arranged to slide within each other.

7. Trolley (10) according to any one of the preceding claims, **characterized in that** it further comprises a second side (14) connected to the extendable device (20) by means of a second connecting element (12).

8. Trolley (10) according to claim 7, **characterized in that** said second side (14) is connected to the extendable device (20) by means of said support elements (18).

9. Trolley (10) according to claim 7 or 8, **characterized in that** said second side (14) is connected to the extendable device (20) by means of said connecting element (26).

10. Trolley (10) according to any one of the preceding claims, **characterized in that** it further comprises rotation means (32, 33) arranged to transmit a movement of rotation from a lifting device (35) to the second wheel assembly (31) and to the trolley body (40), for lifting the wheel (11).
